# EUROPÄISCHE PATENTANMELDUNG

(11) **EP 1 802 102 A1**
(43) Veröffentlichungstag der Anmeldung: **27.06.2007**
(21) Anmeldenummer: 06077113.6
(22) Anmeldetag: 27.11.2006
(51) Int. Cl.: H04N 5/225, G02B 13/06

(54) **Optisches System sowie ein Verfahren zur Bildaufnahme mit unterschiedlichen Abbildungsmassstäben**

(30) Priorität: 23.12.2005 DE 102005062397
(71) Anmelder: DLR Deutsches Zentrum für Luft- und Raumfahrt e.V., 51147 Köln (DE)
(72) Erfinder: Börner, Anko Dr., 12557 Berlin (DE)
(74) Vertreter: Patentanwälte Bressel und Partner

(57) **Zusammenfassung**

Die Erfindung betrifft ein optisches System (1) sowie ein zugehöriges Verfahren zur Bildaufnahme, umfassend mindestens eine Optik und eine Fokalebene, wobei in der Fokalebene (4) mindestens ein photosensitives Bauelement oder ein belichtbares Filmmaterial angeordnet ist, wobei durch das optische System (1) ein Abbildungsmaßstab einstellbar oder eingestellt ist, wobei das optische System (1) mindestens einen Lichtmodulator (2) umfasst, wobei mittels des mindestens einen Lichtmodulators (2) gleichzeitig zwei unterschiedliche Abbildungsmaßstäbe für verschiedene Bereiche auf der Fokalebene (4) eingestellt sind.

## Beschreibung

Die Erfindung betrifft ein optisches System sowie ein Verfahren zur Bildaufnahme.

Kamerasysteme werden für viele Überwachungs- und Messaufgaben eingesetzt. Dabei werden Objekte erfasst und abgelichtet. Die Bilddaten können weiterverarbeitet, ausgewertet und gespeichert werden.

Der Abbildungsmaßstab beschreibt dabei das Verhältnis zwischen Bild- und Objektgröße und entscheidet über den Detaillierungsgrad (Auflösung) der Darstellung. Ein großer Abbildungsmaßstab beschreibt einen hohen Detaillierungsgrad (hohe Auflösung), ein kleiner Maßstab sorgt für eine niedrige Auflösung (geringer Detaillierungsgrad). Da Kamerasysteme immer ein definiertes Bildfeld (Größe des Detektors bzw. des Films) haben, korreliert der Abbildungsmaßstab nicht nur mit der Auflösung, sondern auch gleichzeitig mit dem Blickfeld, d. h., ein großer Abbildungsmaßstab sorgt für ein kleines Blickfeld, ein kleiner Abbildungsmaßstab für ein großes Blickfeld. Unterschiedliche Abbildungsmaßstäbe mit ein und derselben Kamera können durch die Verwendung von Zoom-Objektiven nacheinander eingestellt werden.

Existierende Kamerasysteme erzeugen Bilder, die sich durch einen für das gesamte Bild konstanten Abbildungsmaßstab auszeichnen. Es existieren Anwendungen, bei denen ein Kamerasystem einen großen Bereich erfasst und bei Auffälligkeiten eine hoch auflösende Detailaufnahme erzeugen soll. Dieses Problem ist nur zu lösen, wenn das Kamerasystem sowohl einen großen Blickwinkel als auch eine hohe Auflösung realisieren kann. Diese Forderung kann beispielsweise durch sehr große Sensoren (hohe Pixelzahl), ein Mehrkamera-System (eine weitwinklige und eine hoch auflösende Kamera) oder die Verwendung von Zoom-Objektiven (sequentielle Bildaufnahme mit unterschiedlichen Abbildungsmaßstäben durch mechanische Bewegungen des Objektivs) gelöst werden, wobei alle Lösungen relativ kostenintensiv sind.

Weiter sind Lichtmodulatoren bekannt, die in unterschiedlicher Technologie hergestellt werden können. Dabei wird zwischen transmittiven und reflektiven Lichtmodulatoren unterschieden, wobei erste beispielsweise in LCD-Technik und letztere als Membranspiegel oder als Mikro-Spiegel-Array ausgebildet sind. Eine weitere Unterscheidung ist, ob die Lichtmodulatoren statisch oder dynamisch ausgebildet sind. Bei dynamischen Lichtmodulatoren können die Amplituden- und Phasenfunktionen des Lichtes zeitlich verändert werden, indem eine Recheneinheit zeitlich veränderbare Steuersignale für einzelne Adressen der Lichtmodulatoren berechnet und diese entsprechend ansteuert. Derartige Lichtmodulatoren sind beispielsweise in der DE 698 06 496 T2, DE 692 14 753 T2, DE 196 06 424 A1, DE 44 02 775 C1 oder DE 196 24 276 C2 beschrieben.

Der Erfindung liegt das technische Problem zugrunde, ein optisches System sowie ein zugehöriges Verfahren zur Bildaufnahme zu schaffen, mittels derer kostengünstiger bei großem Blickwinkel gleichzeitig eine hohe Auflösung realisiert werden kann.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu umfasst das optische System mindestens einen Lichtmodulator, wobei mittels dessen gleichzeitig zwei unterschiedliche Abbildungsmaßstäbe für verschiedene Bereiche auf der Fokalebene eingestellt sind bzw. einstellbar sind. Dabei wird ausgenutzt, dass man in der Lage ist, von einem gewünschten Beugungsbild auf die Beugungsstruktur zurückzurechnen. Betrachtet man nun die gewünschten Abbildungsmaßstäbe als Beugungsbild bzw. Beugungsbilder, so kann man auf die gewünschte bzw. benötigte Beugungsstruktur zurückrechnen. Dabei sind je nach Beugungsbild gegebenenfalls zwei oder mehrere Beugungen zu überlagern. In diesem Fall sind dann mindestens zwei Lichtmodulatoren zu verwenden. Somit kann gleichzeitig ein großer Blickwinkel und dennoch abschnittsweise eine große Auflösung realisiert werden.

In einer bevorzugten Ausführungsform wird um die optische Achse herum ein größerer Abbildungsmaßstab eingestellt als für die Randbereiche. Neben der einfacheren Beugungsstruktur hat dies den weiteren Vorteil, dass die Detailaufnahmen mittig in den Bildaufnahmen sind. Die Änderung der Abbildungsmaßstäbe von der optischen Achse zu den Randbereichen kann sprunghaft oder kontinuierlich erfolgen. Bei der sprunghaften Änderung ist es beispielsweise möglich, dass nur zwei unterschiedliche Abbildungsmaßstäbe eingestellt werden.

In einer weiteren bevorzugten Ausführungsform ist der mindestens eine Lichtmodulator als dynamischer Lichtmodulator eingestellt. Dies erlaubt eine Änderung der Abbildungsmaßstäbe während des laufenden Kamerabetriebes. Somit ist es beispielsweise möglich, nachdem eine interessierende Stelle im Bereich mit großem Abbildungsmaßstab detektiert wurde, auf diese Stelle zu "zoomen", d.h. ein geeigneter Abbildungsmaßstab kann für diesen Bereich eingestellt werden. In einer alternativen Ausführungsform kann der Lichtmodulator als statischer Lichtmodulator ausgebildet sein, beispielsweise als Hologramm. Der Vorteil ist dann die Einsparung der Ansteuerung, wobei jedoch die Abbildungsmaßstäbe fest sind.

In einer weiteren bevorzugten Ausführungsform ist der Lichtmodulator als reflektiver und/oder transmittiver Lichtmodulator ausgebildet, wobei die transmittiven Lichtmodulatoren besonders bevorzugt werden.

In einer weiteren bevorzugten Ausführungsform ist vor dem Lichtmodulator ein Filter angeordnet, der beispielsweise eine Halbwertsbreite von 50 mm aufweist. Dies hat den Vorteil, dass dadurch Dispersionseffekte unterdrückt werden, da die Beugung und damit auch die Abbildungsschärfe von der Wellenlänge abhängig ist.

Die Erfindung wird nachfolgend anhand eines bevorzugten Ausführungsbeispiels näher erläutert. Die Fig. zeigen:
- Fig. 1: ein schematisches Blockschaltbild eines optischen Systems zur Bildaufnahme,
- Fig. 2: eine Aufnahme eines Bildes mit einem großen Sensor (Stand der Technik),
- Fig. 3: eine Aufnahme eines Bildes mit einem kleinen Sensor (Stand der Technik) und
- Fig. 4: eine Aufnahme eines Bildes mit einem kleinen Sensor und unterschiedlichen Abbildungsmaßstäben.

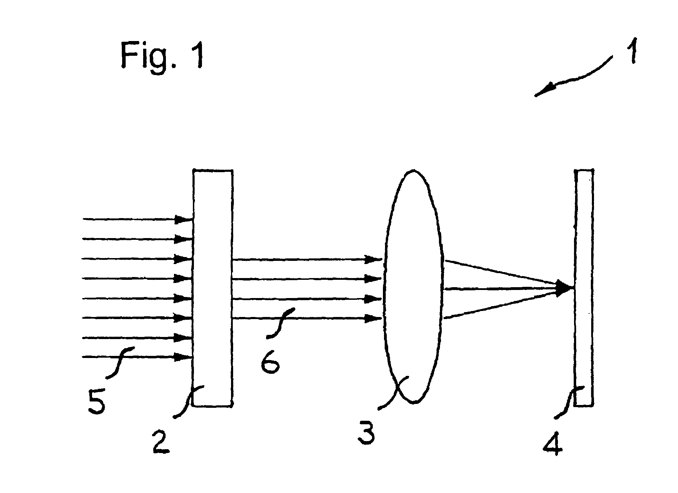

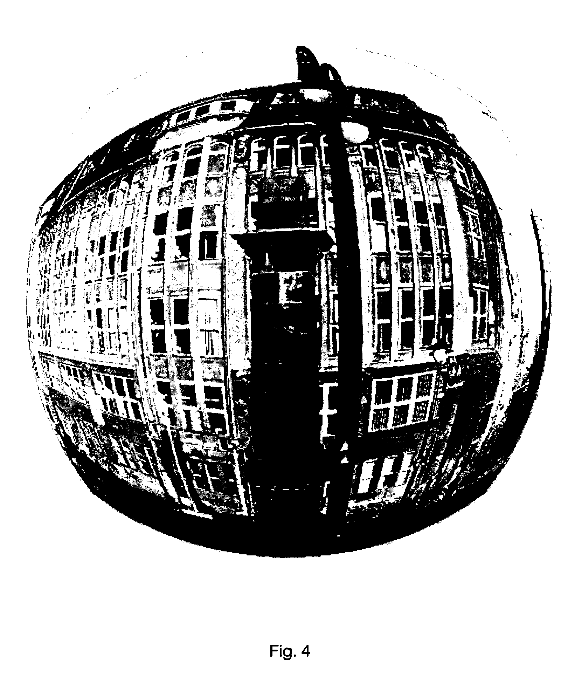

In der Fig. 1 ist schematisch ein optisches System 1 zur Bildaufnahme dargestellt. Das optische System 1 umfasst mindestens einen Lichtmodulator 2, eine Sammellinse 3 und eine Fokalebene 4, auf der ein nicht dargestellter photosensitiver Sensor, wie beispielsweise ein CCD- oder CMOS-Matrix-Sensor, angeordnet ist. Der Lichtmodulator 2 ist dabei als statischer, transmittiver Lichtmodulator ausgebildet. Die von einem Objekt einfallende Wellenfront 5 trifft auf den Lichtmodulator 2, wo die Amplituden- und Phasenfunktion der Wellenfront 5 verändert wird. Die resultierende Wellenfront 6 bildet ein System nach, das mit unterschiedlicher Entfernung von der optischen Achse einen unterschiedlichen Abbildungsmaßstab erzeugt. Dabei kann weiter vorgesehen sein, dass vor dem Lichtmodulator 2 ein Filter und/oder eine weitere Optik angeordnet sind. Die resultierende Wellenfront 6 wird dann von der Sammellinse auf den Sensor in der Fokalebene 4 projiziert, wobei eine beispielhafte Abbildung in Fig. 4 dargestellt ist. Weiter kann vorgesehen sein, dass bei Auffälligkeiten im Randbereich das optische System 1 für eine zweite Aufnahme auf das Objekt ausgerichtet wird und somit eine zweite Aufnahme von dem Objekt mit einem wesentlich höheren Detaillierungsgrad erzeugt werden kann. Bei Verwendung von dynamischen Lichtmodulatoren kann dies sogar ohne Bewegung des optischen Systems erfolgen bzw. der Bereich mit höherer Auflösung kann vergrößert werden.

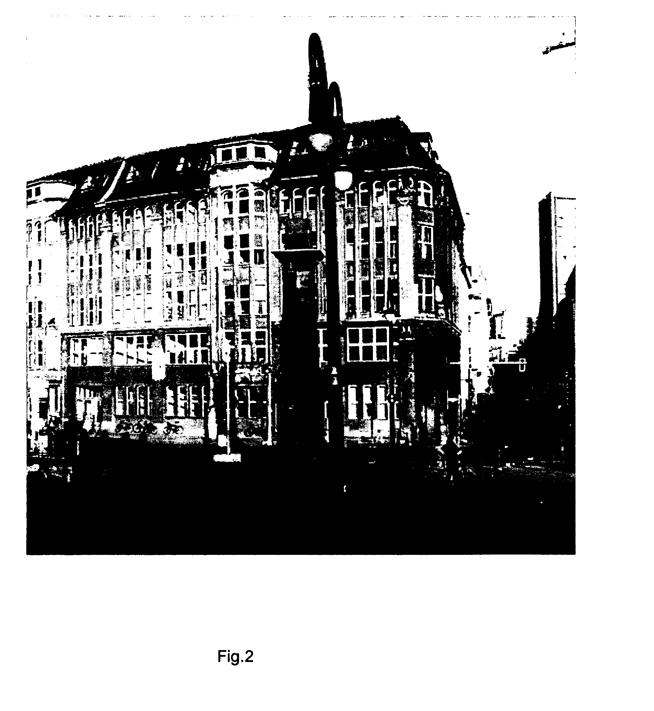

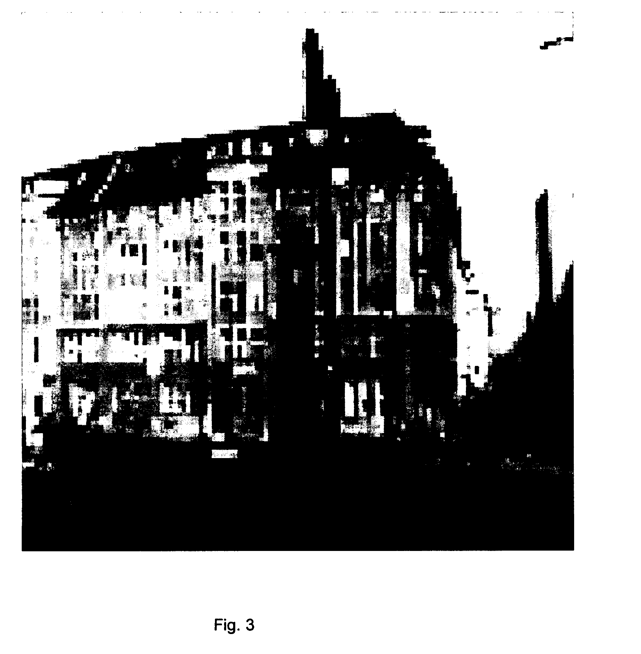

Im Vergleich zu Fig. 4 sind in den Fig. 2 und 3 jeweils Aufnahmen vom gleichen Objekt nach dem Stand der Technik dargestellt. So ist in Fig. 2 eine Aufnahme eines optischen Systems mit großem Blickwinkel und hoher Auflösung dargestellt, wobei der Matrix-Sensor beispielsweise eine Größe von 1024 x 1024 Pixel aufweist. Der Abbildungsmaßstab ist dabei über das gesamte Bild konstant. In der Fig. 3 ist nun bei gleichem Blickwinkel die Aufnahme mit einem Sensor von 128 x 128 Pixel dargestellt. Im Vergleich zu Fig. 2 sind in Fig. 3 keine Details mehr erkennbar.

In der Fig. 4 ist nur die Aufnahme mit einem erfindungsgemäßen optischen System mit einem Sensor von 128 x 128 Pixel dargestellt. Im Gegensatz zu Fig. 3 kann man in der Bildmitte (hohe Auflösung bzw. größerer Abbildungsmaßstab) viele kleine Details erkennen, wobei der Blickwinkel insgesamt gleich groß ist. Somit lässt sich gleichzeitig mit einem kleinen Sensor ein großes Gebiet erfassen und abschnittsweise eine hohe Auflösung realisieren.

## Patentansprüche

1. Optisches System zur Bildaufnahme, umfassend mindestens eine Optik und eine Fokalebene, wobei in der Fokalebene mindestens ein photosensitives Bauelement oder ein belichtbares Filmmaterial angeordnet ist, wobei durch das optische System ein Abbildungsmaßstab einstellbar oder eingestellt ist,
**dadurch gekennzeichnet, dass**
das optische System (1) mindestens einen Lichtmodulator (2) umfasst, wobei mittels des mindestens einen Lichtmodulators (2) gleichzeitig zwei unterschiedliche Abbildungsmaßstäbe für verschiedene Bereiche auf der Fokalebene (4) eingestellt sind.

2. Optisches System nach Anspruch 1, **dadurch gekennzeichnet, dass** um die optische Achse herum ein größerer Abbildungsmaßstab eingestellt ist als für die Randbereiche.

3. Optisches System nach Anspruch 1 oder 2, **dadurch gekennzeichnet, dass** der mindestens eine Lichtmodulator (2) als dynamischer oder statischer Lichtmodulator ausgebildet ist.

4. Optisches System nach einem der vorangegangenen Ansprüche, **dadurch gekennzeichnet, dass** der Lichtmodulator (2) als reflektiver und/oder als transmittiver Lichtmodulator ausgebildet ist.

5. Optisches System nach einem der vorangegangenen Ansprüche, **dadurch gekennzeichnet, dass** vor dem Lichtmodulator (2) ein Filter angeordnet ist.

6. Verfahren zur Bildaufnahme mittels einer Vorrichtung nach Anspruch 1, **dadurch gekennzeichnet, dass** gleichzeitig in einer Aufnahme mindestens zwei unterschiedliche Abbildungsmaßstäbe verwendet werden.
